(19) Europäisches Patentamt
European Patent Office
Office européen des brevets

(11) EP 4 435 018 A1

(12) EUROPEAN PATENT APPLICATION
published in accordance with Art. 153(4) EPC

(43) Date of publication:
**25.09.2024 Bulletin 2024/39**

(21) Application number: **23877745.2**

(22) Date of filing: **13.10.2023**

(51) International Patent Classification (IPC):
***C08F 212/08*** (2006.01) ***C08F 220/34*** (2006.01)
***C08L 25/14*** (2006.01) ***C08F 210/06*** (2006.01)
***C08F 220/36*** (2006.01) ***C08L 23/12*** (2006.01)
***C08L 33/06*** (2006.01)

(52) Cooperative Patent Classification (CPC):
**C08F 210/06; C08F 212/08; C08F 220/34; C08F 220/36; C08L 23/12; C08L 25/14; C08L 33/06**

(86) International application number:
**PCT/KR2023/015815**

(87) International publication number:
**WO 2024/080822 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022 KR 20220131728**
**12.10.2023 KR 20230136278**

(71) Applicant: **LG Chem, Ltd.**
**Yeongdeungpo-gu**
**Seoul 07336 (KR)**

(72) Inventors:
- **SEO, Ue Ryung**
  **Daejeon 34122 (KR)**
- **LEE, Seungmo**
  **Daejeon 34122 (KR)**
- **KANG, Soonhee**
  **Daejeon 34122 (KR)**
- **HUR, Yoon Hyung**
  **Daejeon 34122 (KR)**
- **LEE, Ji Seok**
  **Daejeon 34122 (KR)**
- **CHOI, Hyungsam**
  **Daejeon 34122 (KR)**

(74) Representative: **Plasseraud IP**
**104 Rue de Richelieu**
**CS92104**
**75080 Paris Cedex 02 (FR)**

# (54) ANTIBACTERIAL RESIN AND MOLDED BODY COMPRISING SAME

(57) The present specification relates to an antibacterial resin including a copolymer including a first unit derived from styrene and a second unit derived from a monomer represented by Chemical Formula 1, in which the copolymer has a weight average molecular weight of 10,000 g/mol or more and 1,000,000 g/mol or less, and a molded article including the same.

[Figure 1]

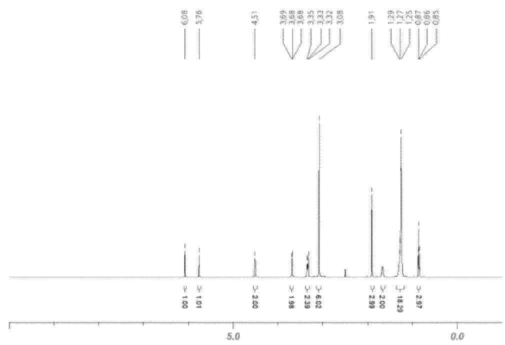


EP 4 435 018 A1

## Description

[Technical Field]

The present specification relates to an antibacterial resin and a molded article including the same.

This application claims priority to and the benefit of Korean Patent Application Nos. 10-2022-0131728 and 10-2023-0136278 filed in the Korean Intellectual Property Office on October 13, 2022 and October 12, 2023, respectively, the entire contents of which are incorporated herein by reference.

[Background Art]

Recently, various products such as daily supplies or hygiene products are required to have high antibacterial properties.

The degree of antibacterial properties required and the material requirements for imparting antibacterial properties differ depending on the material of the product requiring antibacterial properties and the state of final use. For example, the properties of the material for imparting antibacterial properties and the degree of antibacterial properties vary depending on the amount of antibacterial material applied to a product used and the materials used together.

However, in introducing antibacterial agents and the like, which inhibit bacterial proliferation into resins, it has not been easy to select and introduce an antibacterial component that is harmless to the human body, satisfies economic feasibility, and does not degrade the basic physical properties of a polymer resin, while exhibiting excellent bacterial proliferation inhibiting properties.

As one example, general purpose polystyrene (GPPS) is widely used because it is transparent and has good strength. To add antibacterial activity to GPPS, an inorganic antibacterial agent (Cu, Ag, and the like) is added, but depending on the method of addition, sustainability deteriorates and problems occur due to the toxicity of the materials used.

Accordingly, there is a need for developing a highly antibacterial material which is suitable for application to each of the various products, and which does not release antibacterial materials and thus is harmless to the human body.

[Citation List](Patent Document 1) Korean Patent Application Laid-Open No. 10-2009-0131847

[Detailed Description of the Invention]

[Technical Problem]

The present specification provides an antibacterial resin and a molded article including the same.

[Technical Solution]

An exemplary embodiment of the present specification provides an antibacterial resin including a copolymer including: a first unit derived from styrene; and

a second unit derived from a monomer represented by the following Chemical Formula 1,
in which the copolymer has a weight average molecular weight of 10,000 g/mol or more and 1,000,000 g/mol or less.

[Chemical Formula 1]

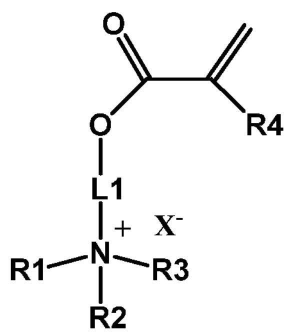

In Chemical Formula 1,

L1 is an alkylene group,
R1 to R3 are the same as or different from each other, and are each independently an alkyl group,
R4 is hydrogen or an alkyl group, and
$X^-$ is a monovalent anion.

Another exemplary embodiment of the present specification provides a molded article including the above-described antibacterial resin or prepared therefrom.

[Advantageous Effects]

An antibacterial resin according to some exemplary embodiments of the present specification has hydrophilic and hydrophobic properties, and thus has excellent antibacterial properties.

The antibacterial resin according to some exemplary embodiments of the present specification can solve safety problems due to the release of antibacterial materials.

The antibacterial resin according to some exemplary embodiments of the present specification can exhibit antibacterial properties within a short period of time.

Since the antibacterial resin according to some exemplary embodiments of the present specification has little change in antibacterial strength depending on the amount of antibacterial material used, the antibacterial resin can exhibit antibacterial properties within an expected range even when the unevenness of concentration occurs unintentionally during application to a product. Therefore, antibacterial properties are controlled within a specific range, so that excellent antibacterial properties can be safely imparted.

The antibacterial resin according to some exemplary embodiments of the present specification has low toxicity, and thus can solve safety problems.

The antibacterial resin according to some exemplary embodiments of the present specification are characterized in that antibacterial activity can be maintained even after high-temperature processing due to excellent heat resistance.

[Brief Description of Drawings]

FIG. 1 is a view illustrating H NMR measurement results of Compound 14.
FIG. 2 is a view illustrating F NMR measurement results of Compound 14.
FIG. 3 is a view illustrating H NMR measurement results of Compound 15.
FIG. 4 is a view illustrating F NMR measurement results of Compound 15.
FIG. 5 is a view illustrating TGA measurement results of the antibacterial resin according to some exemplary embodiments of the present specification.
FIG. 6 is a view illustrating TGA measurement results of a resin according to a comparative exemplary embodiment of the present specification.

[Best Mode]

Hereinafter, the present specification will be described in detail.

An exemplary embodiment of the present specification provides an antibacterial resin including a copolymer including: a first unit derived from styrene; and a second unit derived from a monomer represented by the following Chemical Formula 1,
in which the copolymer has a weight average molecular weight of 10,000 g/mol or more and 1,000,000 g/mol or less.

[Chemical Formula 1]

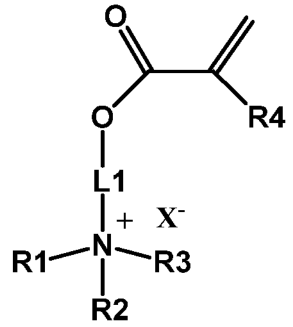

In Chemical Formula 1,

L1 is an alkylene group,
R1 to R3 are the same as or different from each other, and are each independently an alkyl group,
R4 is hydrogen or an alkyl group, and
$X^-$ is a monovalent anion.

In the related art, in order to impart antibacterial activity to materials, antibacterial agents were simply mixed with polymers, and in this case, inorganic antibacterial agents or organic antibacterial agents were used. The inorganic antibacterial agents are expensive, easily induce discoloration of materials, and may degrade the physical properties of polymers during processing processes such as extrusion or injection. Further, the inorganic antibacterial agents also have a disadvantage in that the immediate antibacterial efficacy thereof is low. The organic antibacterial agents themselves have a disadvantage in that antibacterial persistence deteriorates due to poor stability against the human and poor thermal stability.
In contrast, since the antibacterial resin according to the present specification does not include an inorganic antibacterial agent, and thus overcomes disadvantages such as discoloration and deterioration in transparency, and an antibacterial material is not included as a separate substance but is polymerized as a monomer, there is an advantage in that stability for the human body is excellent and antibacterial persistence is maintained. When an organic antibacterial agent is applied to the polymerization of a polymer, the polymerization efficiency or conversion rate decreases or the inherent advantages of the polymer are impaired in many cases, but the present invention may also overcome these disadvantages. Due to the above advantages, the antibacterial resin of the present specification may exhibit excellent antibacterial persistence. That is, the antibacterial resin of the present specification may simultaneously improve stability due to the release of the antibacterial agent while having excellent antibacterial properties and antibacterial persistence.
Further, when the antibacterial resin has a weight average molecular weight of less than 10,000 g/mol, the antibacterial resin is present in the form of a monomer rather than in the form of a macromolecule, and thus, may be easily eluted, and there may occur a problem in that the antibacterial resin is absorbed in the human body due to low molecular weight, and when the antibacterial resin has a weight average molecular weight of more than 1,000,000 g/mol, the molecular weight is excessively increased, so that the viscosity is increased and the antibacterial resin is not easily applied, and thus processability deteriorates, thereby leading to deterioration in antibacterial activity.
More preferably, the antibacterial resin has a weight average molecular weight (Mw: g/mol) of 15,000 g/mol or more, 20,000 g/mol or more, 30,000 g/mol or more, or 40,000 g/mol or more and 1,000,000 g/mol or less, 500,000 g/mol or less, 400,000 g/mol or less, 300,000 g/mol or less, 200,000 g/mol or less, or 150,000 g/mol or less.
According to an exemplary embodiment of the present specification, the antibacterial resin has a number average molecular weight (Mn) of 10,000 g/mol to 800,000 g/mol. More preferably, the antibacterial resin has a number average molecular weight of 15,000 g/mol or more, 20,000 g/mol or more, 25,000 g/mol or more, 30,000 g/mol or more, 35,000 g/mol or more, or 40,000 g/mol or more, and 150,000 g/mol or less, 100,000 g/mol or less, 90,000 g/mol or less or 80,000 g/mol or less.
According to an exemplary embodiment of the present specification, the weight average molecular weight (Mw) and number average molecular weight (Mn) of the antibacterial resin may be measured using gel permeation chromatography (GPC) .
According to an exemplary embodiment of the present specification, the GPC is measured as follows.
A material to be analyzed is diluted with dimethylformamide (DMF) to a concentration of 5 mg/mL, dissolved at 50°C for 6 hours, and then filtered with a PVDF filter (pore size: 0.45 um) to prepare a sample solution. ChemStation manufactured by Agilent Technologies, Inc. was used as an analysis program, and the weight average molecular weight

(Mw) and number average molecular weight (Mn) were each determined by comparing the elution time of the sample with the calibration curve. The measurement conditions of GPC are as follows.

- Apparatus: 1200 series manufactured by Agilent Technologies, Inc.
- Stationary phase: 3x Agilent PLgel MIXED-C, 7.5 X 300 mm, 5 um
- Mobile phase A: 0.05 M LiBr in DMF
- Flow rate: 1.0 mL/min
- Stationary phase temperature: 40°C
- Injection amount: 100 μL (0.45 um filter)
- Standard sample: PS

According to an exemplary embodiment of the present specification, the antibacterial resin may have a molecular weight distribution (Mw/Mn) within a range of 1 to 3. The molecular weight distribution may be 1.1 or more, 1.2 or more, 1.3 or more, or 1.4 or more, or 2.8 or less, 2.6 or less, 2.4 or less, 2.2 or less, 2.0 or less, 1.8 or less, or 1.6 or less in other examples.

The weight average molecular weight, number average molecular weight, and molecular weight distribution of the antibacterial resin may be determined by a copolymer including the first unit derived from the above-described styrene; and the second unit derived from the monomer represented by Chemical Formula 1

When one part "includes" one constituent element in the present specification, unless otherwise specifically described, this does not mean that another constituent element is excluded, but means that another constituent element may be further included.

In the present specification, the "monomer" means a unit compound that may be converted into a polymer compound by a polymerization reaction, and structures derived therefrom may become a repeating unit in a polymer or copolymer. Specifically, this means that in a state in which the corresponding compound is polymerized and bonded in the polymer, in the structure of the compound, all or a portion of two or more substituents are omitted, and a radical for being bonded to other units of the polymer is located at the position. In this case, the corresponding compound may be included in a state of being polymerized in any order and bonded in the polymer.

In the present specification, the "derived" means that a new bond is generated while a bond between at least two adjacent elements in a compound is broken, or hydrogen or a substituent is detached, and a unit derived from the compound may mean a unit which forms one or more of a main chain and a side chain in a polymer. The unit may be included in a main chain in a polymer to constitute the polymer.

In the present specification, the "weight average molecular weight" is one of the average molecular weights in which the molecular weight is not uniform and the molecular weight of any polymer material is used as a reference, and is a value obtained by averaging the molecular weight of a component molecular species of a polymer compound having a molecular weight distribution by a weight fraction.

In the present specification, among physical properties, physical properties which are affected by temperature are physical properties measured at room temperature, unless otherwise specified.

In the present specification, "room temperature" means the natural temperature that has not been heated or cooled, for example, any one temperature within a range of about 10°C to 30°C, for example, a temperature of about 15°C, about 18°C, meaning a temperature of about 20°C, about 23°C, or about 25°C. Further, in the present specification, the unit of temperature is °C, unless otherwise specified.

In the present specification, when pressure among physical properties affects the results, the corresponding physical property is a physical property measured at normal pressure, unless otherwise specified.

In the present specification, "normal pressure" is the natural pressure that has not been pressurized or depressurized, and refers to a pressure which is typically about 1 atmosphere (about 700 to 800 mmHg).

In the present specification, when humidity among physical properties affects the results, the corresponding physical property is a physical property measured at a humidity that is not particularly controlled in the room temperature and normal pressure state, unless otherwise specified.

In the present specification, an "alkyl group" may be straight-chained or branched, and the number of carbon atoms thereof is not particularly limited, but is preferably 1 to 60. According to an exemplary embodiment of the present specification, the number of carbon atoms of the alkyl group is 1 to 30. Specific examples of the alkyl group include a methyl group, an ethyl group, a propyl group, an isopropyl group, a butyl group, an isobutyl group, a tert-butyl group, a pentyl group, a hexyl group, a heptyl group, an octyl group, a nonyl group, a decyl group, an undecyl group, a dodecyl group, a tridecyl group, and the like, but are not limited thereto.

In the present specification, an "alkylene group" means a group having two bonding positions in an alkyl group, that is, a divalent group. The above-described description on the alkyl group may be applied to the alkylene group, except for a divalent alkylene group.

In the present specification, the "alkoxy group" may be straight-chained, branched, or cyclic. The number of

carbon atoms of the alkoxy group is not particularly limited, but is preferably 1 to 30. Specific examples thereof include methoxy, ethoxy, n-propoxy, isopropoxy, i-propyloxy, n-butoxy, isobutoxy, tert-butoxy, sec-butoxy, n-pentyloxy, neopentyloxy, isopentyloxy, n-hexyloxy, 3,3-dimethylbutyloxy, 2-ethylbutyloxy, n-octyloxy, n-nonyloxy, n-decyloxy, benzyloxy, p-methylbenzyloxy, and the like, but are not limited thereto.

In the present specification, "*" means an attachment point in the copolymer. In this case, the attachment point may be a point where the same units are attached to each other, and may also be a point where different units are attached to each other. As an example, in the following Chemical Formula 2-1, * means both a part to which the first units are attached and a part to which the first unit and the second unit are attached.

In the present specification, the "antibacterial resin" may mean a copolymer itself including a first unit derived from the styrene and a second unit derived from the monomer represented by Chemical Formula 1, and may also mean that additional components in addition to the polymer are further included.

According to an exemplary embodiment of the present specification, the first unit derived from the styrene may have a structure in which the double bond of styrene forms a repeating unit while being broken.

According to an exemplary embodiment of the present specification, the first unit is represented by the following Chemical Formula 2-1.

[Chemical Formula 2-1]

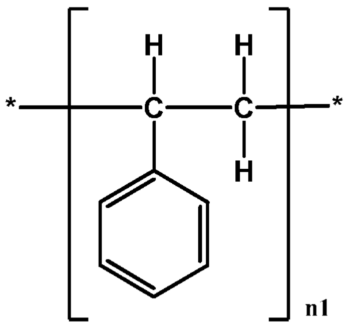

In Chemical Formula 2-1,

n1 is an integer from 1 to 10,000, and
* is an attachment point in the copolymer.

According to an exemplary embodiment of the present specification, n1 is an integer from 3 to 10,000, an integer from 10 to 8,000, or an integer from 20 to 5,000.

According to an exemplary embodiment of the present specification, the copolymer includes 1 to 10,000 of the first units. Specifically, the copolymer includes 3 to 10,000, 10 to 8,000, or 20 to 5,000 of the first units.

According to an exemplary embodiment of the present specification, the monomer represented by Chemical Formula 1 is an antibacterial material.

According to an exemplary embodiment of the present specification, the second unit is represented by the following Chemical Formula 1-1.

[Chemical Formula 1-1]

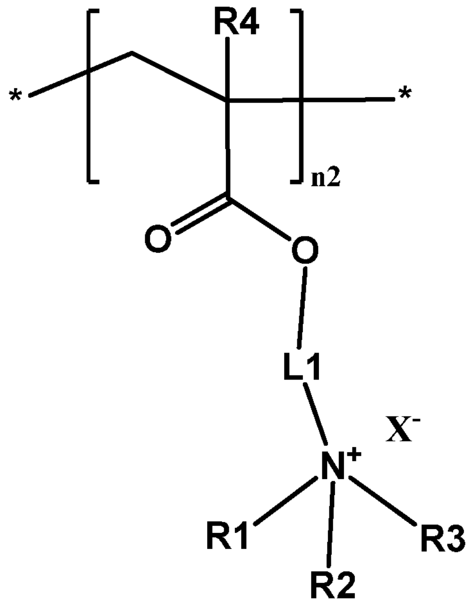

In Chemical Formula 1-1,

L1 is an alkylene group,
R1 to R3 are the same as or different from each other, and are each independently an alkyl group,
R4 is hydrogen or an alkyl group,
$X^-$ is a monovalent anion,
n2 is an integer from 1 to 10,000, and
* is an attachment point in the copolymer.

According to an exemplary embodiment of the present specification, n2 is an integer from 3 to 10,000, an integer from 10 to 8,000, or an integer from 20 to 5,000.
According to an exemplary embodiment of the present specification, R4 is hydrogen or an alkyl group having 1 to 10 carbon atoms.
According to an exemplary embodiment of the present specification, R4 is hydrogen or a methyl group.
According to an exemplary embodiment of the present specification, L1 is an alkylene group having 1 to 10 carbon atoms.
According to an exemplary embodiment of the present specification, L1 is an alkylene group having 1 to 5 carbon atoms.
According to an exemplary embodiment of the present specification, L1 is a methylene group; an ethylene group; a propylene group; or a butylene group.
According to an exemplary embodiment of the present specification, R1 to R3 are the same as or different from each other, and are each independently an alkyl group having 1 to 30 carbon atoms.
According to an exemplary embodiment of the present specification, any one of R1 to R3 is an alkyl group having 5 to 30 carbon atoms, and the others are the same as or different from each other, and are each independently an alkyl group having 1 to 30 carbon atoms.
According to an exemplary embodiment of the present specification, any one of R1 to R3 is an alkyl group having 5 to 30 carbon atoms, and the others are the same as or different from each other, and are each independently an alkyl group having 1 to 20 carbon atoms.
According to an exemplary embodiment of the present specification, any one of R1 to R3 is an alkyl group having 5 to 30 carbon atoms, and the others are the same as or different from each other, and are each independently an alkyl group having 1 to 10 carbon atoms.
According to an exemplary embodiment of the present specification, any one of R1 to R3 is an alkyl group having 5 to 20 carbon atoms, and the others are the same as or different from each other, and are each independently an alkyl group having 1 to 30 carbon atoms.
According to an exemplary embodiment of the present specification, any one of R1 to R3 is an alkyl group having 5 to 20 carbon atoms, and the others are the same as or different from each other, and are each independently an alkyl group having 1 to 20 carbon atoms.

According to an exemplary embodiment of the present specification, any one of R1 to R3 is an alkyl group having 5 to 20 carbon atoms, and the others are the same as or different from each other, and are each independently an alkyl group having 1 to 10 carbon atoms.

According to an exemplary embodiment of the present specification, two or more of R1 to R3 are an alkyl group having 6 to 30 carbon atoms, or the difference in carbon number between an alkyl group having the largest number of carbon atoms and an alkyl group having the smallest number of carbon atoms among R1 to R3 is 4 or more.

Specifically, three of R1 to R3 are an alkyl group having 6 to 30 carbon atoms; two of R1 to R3 are an alkyl group having 6 to 30 carbon atoms, the other one is an alkyl group having 1 to 30 carbon atoms; or the difference in carbon number between an alkyl group having the largest number of carbon atoms and an alkyl group having the smallest number of carbon atoms among R1 to R3 is 4 or more. In this case, an effect in which antibacterial activity is excellent is exhibited.

According to an exemplary embodiment of the present specification, a difference in the number of carbon atoms between the alkyl group having the largest number of carbon atoms and the alkyl group having the smallest number of carbon atoms of 4 or more means that the asymmetry is large, and the difference in the number of carbon atoms may be 4 to 30, 5 to 30, or 5 to 10.

According to an exemplary embodiment of the present specification, the monomer represented by Chemical Formula 1 is any one of the following structures.

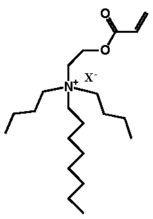
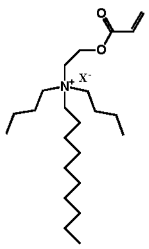
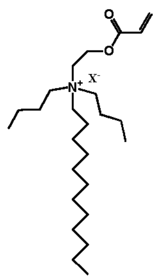
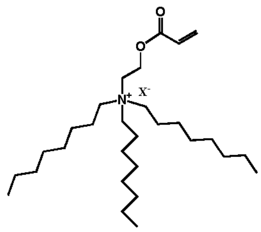

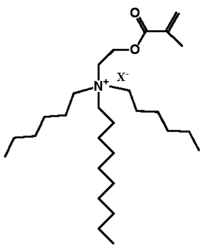
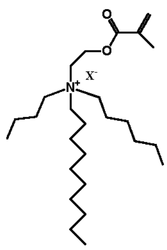
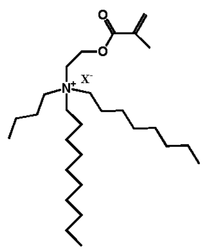
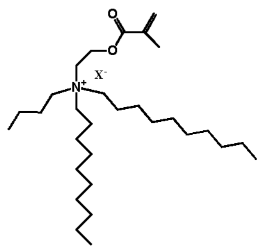

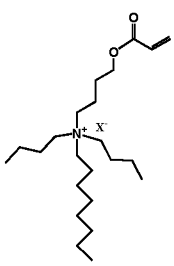
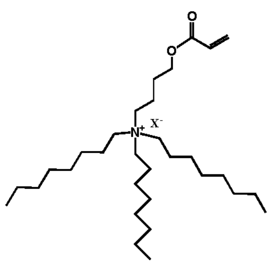
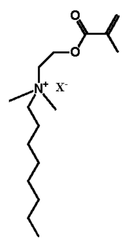
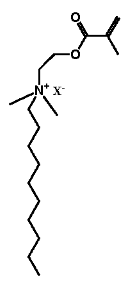
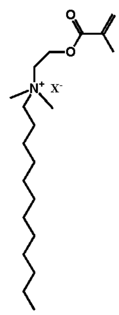

In the structures, $X^-$ is a monovalent anionic group.

According to an exemplary embodiment of the present specification, the second unit derived from the monomer represented by Chemical Formula 1 is any one of the following structures.

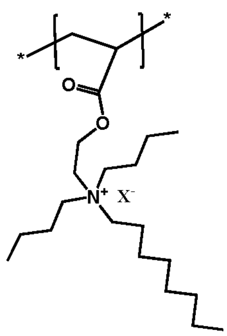

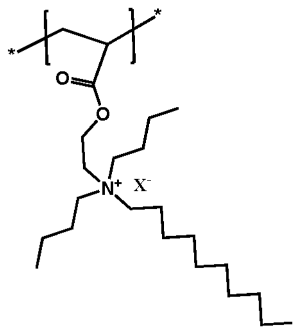

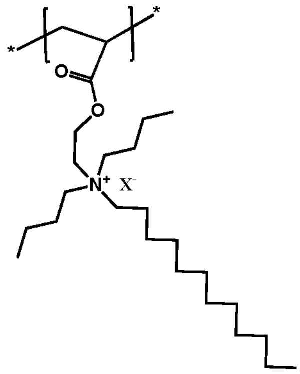

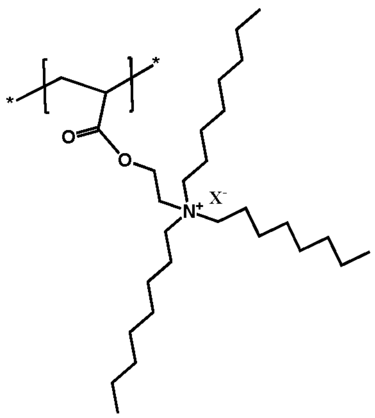

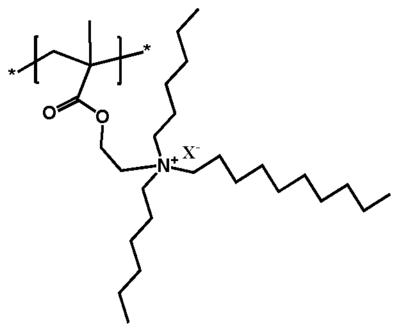

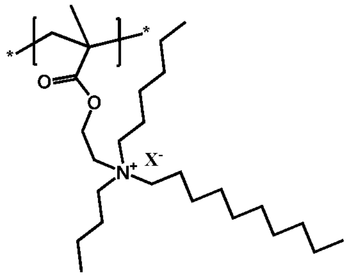

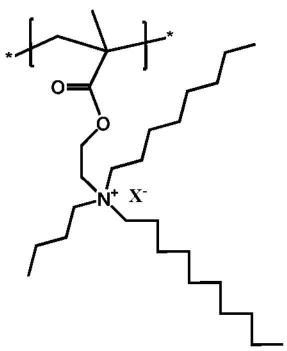

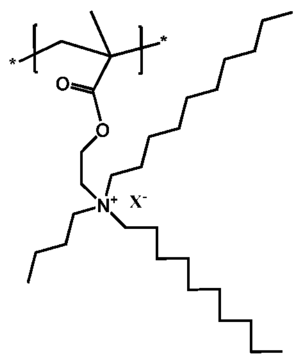

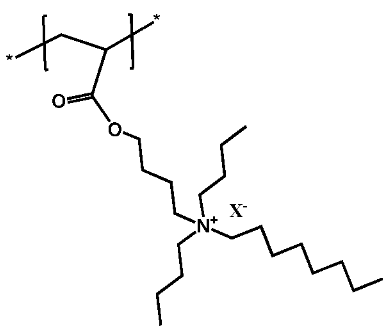

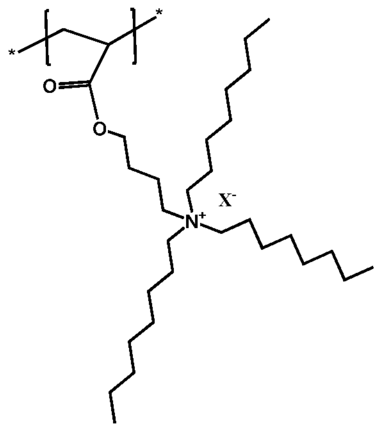

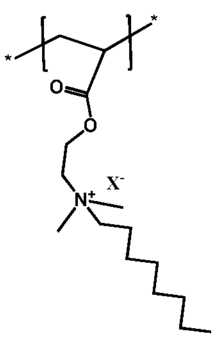 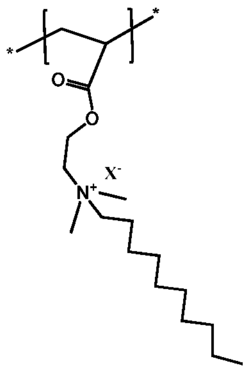 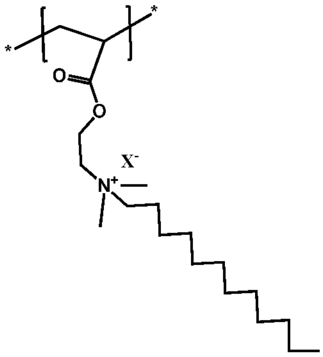

In the structures, $X^-$ is a monovalent anionic group, and * is an attachment point in the copolymer.

According to an exemplary embodiment of the present specification, the copolymer includes 1 to 10,000 of the second units. Specifically, the copolymer includes 3 to 10,000, 10 to 8,000, or 20 to 5,000 of the second units.

According to an exemplary embodiment of the present specification, X- is any one selected from the following Group 1.

[Group 1]

$Br^-$, $Cl^-$, $I^-$, $F^-$, $BF_4^-$, $OH^-$, $CF_3COO^-$, $CF_3SO_3^-$, $NO_3^-$, $SH^-$,

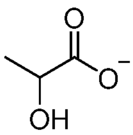 , 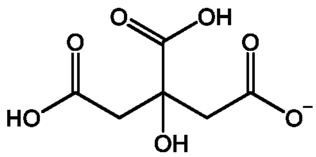 , 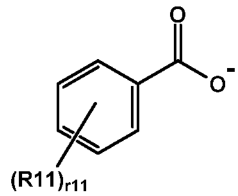

and 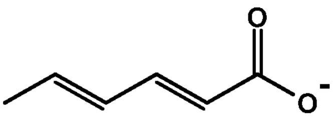 .

In Group 1,

R11 is hydrogen; deuterium; a hydroxy group; a substituted or unsubstituted alkoxy group; or a substituted or unsubstituted alkyl group, and

r11 is an integer from 1 to 5, and when r11 is 2 or higher, two or more R11's are the same as or different from each other.

According to an exemplary embodiment of the present specification, R11 is hydrogen; a hydroxyl group; or an alkoxy group.

According to an exemplary embodiment of the present specification, r11 is an integer from 1 to 3.

According to an exemplary embodiment of the present specification, X- is any one selected from the following Group 2.

[Group 2]

$Br^-$, $Cl^-$, $I^-$, $F^-$, $BF_4^-$, $OH^-$, $CF_3COO^-$, $CF_3SO_3^-$, $NO_3^-$, $SH^-$,

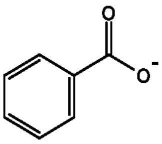 , 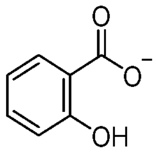 , 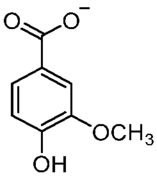 , 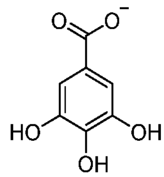 , 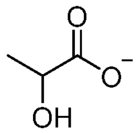 ,

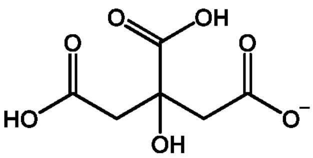 and 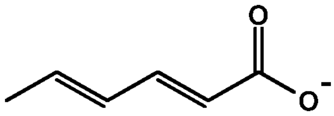

According to an exemplary embodiment of the present specification, a molar ratio of the first unit and the second unit is 100:0.5 to 100:50. Specifically, the molar ratio is 100:0.5 to 100:40, 100:0.5 to 100:30, or 100:0.5 to 100:10. When the molar ratio of the first unit and the second unit satisfies the above-described range, the resin including the first unit and the second unit exhibits the same or better effects in terms of antibacterial properties, heat resistance, and mechanical properties (tensile strength, impact strength, flexural properties, and the like), compared to the resin including only the first unit and the resin including only the second unit.

The antibacterial properties of the antibacterial resin are derived from the anionic functional group and cationic functional group included in the second unit which the antibacterial resin includes. In general, cell walls of bacteria and the like are often negatively charged, and the cationic functional group may perform a destructive action on the cell walls.

According to an exemplary embodiment of the present specification, a copolymer is a random copolymer, an alternating copolymer, or a block copolymer. Specifically, the copolymer is a random copolymer.

According to an exemplary embodiment of the present specification, the first unit and the second unit are included in the main chain of the copolymer.

According to an exemplary embodiment of the present specification, the first unit is included in the main chain of the copolymer, and the second unit is included in the side chain of the copolymer.

According to an exemplary embodiment of the present specification, the antibacterial resin includes a third unit represented by the following Chemical Formula 3.

[Chemical Formula 3]

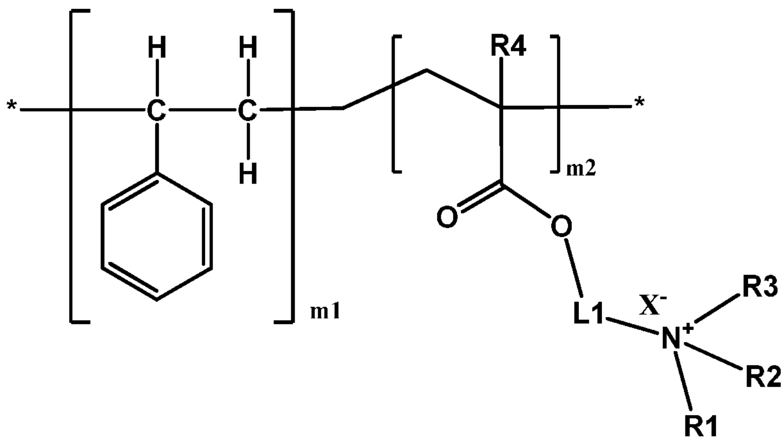

In Chemical Formula 3,

L1 is an alkylene group,
R1 to R3 are the same as or different from each other, and are each independently an alkyl group,

R4 is hydrogen or an alkyl group,
$X^-$ is a monovalent anion,
m1 and m2 are each an integer from 1 to 10,000, and
* is an attachment point in the copolymer.

According to an exemplary embodiment of the present specification, m1 and m2 are each an integer from 3 to 10,000, an integer from 10 to 8,000, or an integer from 20 to 5,000.

According to an exemplary embodiment of the present specification, a copolymer including a first unit derived from the styrene; and a second unit derived from the monomer represented by Chemical Formula 1 is represented by Chemical Formula 3.

According to an exemplary embodiment of the present specification, the terminal end of the copolymer is any one of the following structures.

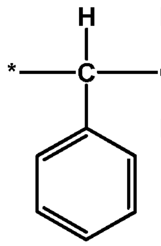

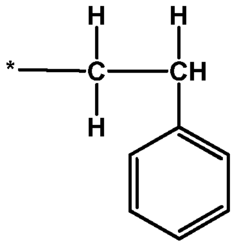

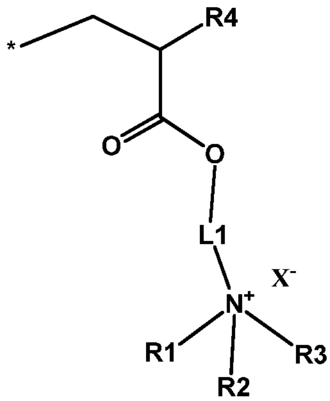

In the structures, L1, R1 to R4 and $X^-$ are the same as those defined in Chemical Formula 1, and ——* is a moiety attached to the copolymer.

According to an exemplary embodiment of the present specification, the antibacterial resin has antibacterial properties.

In the present specification, having antibacterial properties means that the antibacterial activity measured based on the following Method 1, in other words, the bacteriostatic reduction rate is 90% or more.

According to an exemplary embodiment of the present specification, the antibacterial resin has an antibacterial activity of 90% or more against at least one strain selected from the group consisting of Gram-positive bacteria, Gram-negative bacteria, and molds, as measured by the following Method 1.

[Method 1]

After 0.2 g of the antibacterial resin is put into a 50 mL conical tube, 10 mL of phosphate buffered saline inoculated with $2 \times 10^5$ CFU/mL of strain is injected into the conical tube, and the conical tube is incubated in a shaking incubator maintained at 35°C for 1 hour. The culture solution is diluted 1-fold, 10-fold, and 100-fold, respectively, and spread on agar medium plates. The spread agar medium plate is allowed to stand for incubation at 37°C for 24 to 48 hours. Antibacterial activity is derived by calculating the following Equation 1 based on the colony forming unit (CFU) number of each of the samples diluted 1-fold, 10-fold, and 100-fold.

[Equation 1]

$$\text{Antibacterial activity}(\%) = (1 - A_{sample}/A_{Reference}) \times 100$$

$A_{Sample}$ = Concentration of microorganism in medium incubated by adding the antibacterial resin
$A_{Reference}$ = Concentration of microorganism in medium incubated without adding the antibacterial resin

When the antibacterial activity of the antibacterial resin according to the present specification was evaluated using Method 1, only the case where the antibacterial activity was 90% or more was observed. As a result, it could be confirmed that the antibacterial resin according to the present specification has excellent antibacterial activity.

The antibacterial activity may be 920 or more, 950 or more, 990 or more, 99.8% or more, or 99.9% or more in other examples. The upper limit of the antibacterial activity is not particularly limited, and may be, for example, 100% or less or less than 100%.

As used herein, the term Gram-positive bacteria is a general term for bacteria that are stained purple when stained using the Gram staining method, and Gram-positive bacteria exhibit a purple color without discoloration even though the Gram-positive bacteria are stained with a basic dye such as crystal violet and then treated with ethanol because the cell walls of Gram-positive bacteria are composed of several layers of peptidoglycan.

According to an exemplary embodiment of the present specification, the Gram-positive bacteria are selected from *Enterococcus faecalis, Staphylococcus aureus, Streptococcus pneumoniae*, *Enterococcus faecium* and *Lactobacillus lactis.* Specifically, the Gram-positive bacteria are any one selected from the above-described examples, but are not limited thereto.

In the present specification, the Gram-negative bacteria are a general term for bacteria that are stained red when stained with the Gram staining method, and Gram-negative bacteria have an outer membrane composed of lipid polysaccharides, lipid proteins, and/or other complex polymeric materials instead of having a cell wall with a relatively small amount of peptidoglycan compared to Gram-positive bacteria.

According to an exemplary embodiment of the present specification, the Gram-negative bacteria are selected from *Proteus mirabilis, Escherichia coli, Salmonella typhi*, *Pseudomonas aeruginosa* and *Vibrio cholerae.* Specifically, the Gram-negative bacteria are any one selected from the above-described examples, but are not limited thereto.

According to an exemplary embodiment of the present specification, the mold may be *Candida albicans*, but is not limited thereto.

According to an exemplary embodiment of the present specification, the antibacterial resin has an antibacterial activity of 90% or more against Gram-positive bacteria as measured by Method 1.

According to an exemplary embodiment of the present specification, the antibacterial resin has an antibacterial activity of 90% or more against Gram-negative bacteria as measured by Method 1.

According to an exemplary embodiment of the present specification, the antibacterial resin has an antibacterial activity of 90% or more against molds as measured by Method 1.

According to an exemplary embodiment of the present specification, the bacterium used in the measurement of antibacterial activity is *Escherichia coli.*

According to an exemplary embodiment of the present specification, the antibacterial resin has an antibacterial activity of 90% or more against Gram-positive bacteria, Gram-negative bacteria, and molds as measured by Method 1. Since the strains of the Gram-positive bacteria, Gram-negative bacteria and molds may not only induce various diseases upon contact, but also cause secondary infections, it is preferred to exhibit antibacterial properties against all of the Gram-positive bacteria, Gram-negative bacteria, and molds using one antibacterial agent.

An exemplary embodiment of the present specification provides a composition for forming an antibacterial resin for forming the above-described antibacterial resin.

According to an exemplary embodiment of the present specification, the composition for forming an antibacterial resin includes styrene; a monomer represented by Chemical Formula 1; and an initiator.

According to an exemplary embodiment of the present specification, the amount of the styrene is 55 parts by weight to 99.7 parts by weight based on 100 parts by weight of the composition for forming an antibacterial resin. Specifically, the styrene is included in an amount of 65 parts by weight to 99.5 parts by weight, or 70 parts by weight to 99.5 parts by weight. When the content of styrene satisfies the above range, the resin may exhibit an excellent strength effect while being transparent.

According to an exemplary embodiment of the present specification, the amount of the monomer represented by Chemical Formula 1 is 0.2 parts by weight to 40 parts by weight based on 100 parts by weight of the composition for forming an antibacterial resin. Specifically, the monomer represented by Chemical Formula 1 is included in an amount of 0.5 parts by weight to 35 parts by weight, or 0.5 parts by weight to 30 parts by weight. When the content of the monomer represented by Chemical Formula 1 satisfies the above range, there is an effect of exhibiting excellent antibacterial properties and antibacterial persistence.

According to an exemplary embodiment of the present specification, the initiator is included in an amount of 0.1 parts by weight to 5 parts by weight based on 100 parts by weight of the composition for forming an antibacterial resin. As an example, the initiator is included in an amount of 0.1 parts by weight to 5 parts by weight, 0.1 parts by weight to 4 parts by weight, 0.1 parts by weight to 3 parts by weight, 0.1 parts by weight to 2 parts by weight, 0.1 parts by weight to 1 part by weight, or 0.1 parts by weight to 0.5 parts by weight based on 100 parts by weigh of the composition for forming an antibacterial resin. In this case, when the content of the initiator is less than 0.1 parts by weight, the polymerization reaction time is prolonged and the polymerization conversion efficiency is reduced, so that there is a concern in that productivity deteriorates. Specifically, the polymerization conversion efficiency is decreased, so that there is a disadvantage in that a large amount of residual monomer and decomposition products are generated. In contrast, when the content exceeds 5 parts by weight, the initiator is not completely consumed during the polymerization process and

remains in a polymer to be finally prepared, so that there is a concern in that the physical properties of the polymer, particularly, thermal stability, and the like deteriorate.

According to an exemplary embodiment of the present specification, examples of the initiator include a peroxide-based compound such as dicumyl peroxide, dipentyl peroxide, di-3,5,5-trimethylhexanoyl peroxide or dilauryl peroxide; a peroxydicarbonate-based compound such as diisopropyl peroxydicarbonate, di-sec-butyl peroxydicarbonate or di-2-ethylhexyl peroxydicarbonate; a peroxyester-based compound such as t-butylperoxy pivalate, 1,1,3,3-tetramethylbutyl peroxyneodecanoate or t-butyl peroxyneodecanoate; an azo-based compound such as azobisisobutyronitrile (AIBN) and azobis-2,4-dimethylvaleronitrile; a hydroperoxide-based compound such as t-butyl hydroperoxide; or a sulfate-based compound such as potassium persulfate or ammonium persulfate; or the like, and any one thereof or a mixture of two or more thereof may be used, but the initiator is not limited to the examples.

An exemplary embodiment of the present specification provides a molded article including the above-described antibacterial resin or prepared therefrom. The molded article may be specifically a vegetable box for a refrigerator, an automobile part, a blow molding molded article, an inflation molded article, a cast molded article, an extrusion laminate molded article, an extrusion molded article, a foam molded article, an injection molded article, a sheet, a film, a fiber, a monofilament, or a non-woven fabric, but is not limited to the examples. The automobile part may be an interior or exterior material for automobiles.

[Mode for Invention]

Hereinafter, the present specification will be described in detail with reference to Examples for specifically describing the present specification. However, the Examples according to the present specification may be modified in various forms, and it is not interpreted that the scope of the present specification is limited to the Examples described below. The Examples of the present specification are provided to more completely explain the present specification to a person with ordinary skill in the art.

**<Preparation Example 1> Preparation of monomer represented by Chemical Formula 1**

**Preparation Example 1-1. Synthesis of Compound 1**

Step 1.

(1) 0.1 mol of 2-(dibutylamino)ethanol (DBAE), 0.1 mol of trimethylamine and 0.001 mol of hydroquinone were added to 100 mL of THF (solvent).
(2) 0.1 mol of methacryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromooctane were dissolved at 50 wt% in acrylonitrile (solvent) at a molar ratio of 1:1.
(2) Subsequently, p-methoxyphenol, which is a polymerization inhibitor, was added (ratio with reactants is 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The filtered mixture was vacuum dried at 45°C to prepare Compound 1.

**Preparation Example 1-2. Synthesis of Compounds 2 and 3**

Compounds 2 and 3 were prepared in the same manner as in Preparation Example 1-1, except that 1-bromodecane (preparation of Compound 2) or 1-bromododecane (preparation of Compound 3) was used instead of 1-bromooctane in (1) of Step 2 of Preparation Example 1-1.

**Preparation Example 1-3. Synthesis of Compound 4**

Compound 4 was prepared in the same manner as in Preparation Example 1-1, except that 2-(dioctylamino)ethanol (DOAE) was used instead of 2-(dibutylamino)ethanol in (1) of Step 1 of Preparation Example 1-1.

**Preparation Example 1-4. Synthesis of Compound 5**

Step 1.

(1) 0.1 mol of 2-(dihexylamino) ethanol (DHAE), 0.1 mol of trimethylamine and 0.001 mol of hydroquinone were put into 100 mL of THF (solvent).
(2) 0.1 mol of methacryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromodecane were dissolved at 50 wt% in acrylonitrile (solvent) at a molar ratio of 1:1.
(2) Subsequently, p-methoxyphenol, which is a polymerization inhibitor, was added (ratio with reactants is 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The filtered mixture was vacuum dried at 45°C to prepare Compound 5.

**Preparation Example 1-5. Synthesis of Compound 6**

Compound 6 was prepared in the same manner as in Preparation Example 1-4, except that 2-(butylhexylamino)ethanol (BHAE) was used instead of 2-(dihexylamino)ethanol in (1) of Step 1 of Preparation Example 1-4.

**Preparation Example 1-6. Synthesis of Compound 7**

Compound 7 was prepared in the same manner as in Preparation Example 1-4, except that 2-(butyloctylamino)ethanol (BOAE) was used instead of 2-(dihexylamino)ethanol in (1) of Step 1 of Preparation Example 1-4.

**Preparation Example 1-7. Synthesis of Compound 8**

Compound 8 was prepared in the same manner as in Preparation Example 1-4, except that 2-(butyldecylamino)ethanol (BOAE) was used instead of 2-(dihexylamino)ethanol in (1) of Step 1 of Preparation Example 1-4.

**Preparation Example 1-8. Synthesis of Compound 9**

Compound 9 was prepared in the same manner as in Preparation Example 1-1, except that 2-(dibutylamino)butanol (DBAB) was used instead of 2-(dibutylamino)ethanol in (1) of Step 1 of Preparation Example 1-1.

**Preparation Example 1-9. Synthesis of Compound 10**

Compound 10 was prepared in the same manner as in Preparation Example 1-1, except that 2-(dioctylamino)butanol (DOAB) was used instead of 2-(dibutylamino)ethanol in (1) of Step 1 of Preparation Example 1-1.

**Preparation Example 1-10. Synthesis of Compound 11**

(1) 1-bromooctane (preparation of Compound 11), 2-(dimethylamino)ethyl methacrylate, 4-methoxyphenol and acetonitrile were sequentially put into a two-neck round bottom flask (RBF).
(2) The resulting mixture was reacted at 60°C for 6 hours.
(3) After static precipitation (MTBE:reaction solution = 15:1 (volume ratio)) in methyl t-butyl ether (MTBE), the mixture was filtered.
(4) The resulting product was dried under vacuum at 45°C.

**Preparation Example 1-11. Synthesis of Compounds 12 and 13**

Compounds 12 and 13 were prepared in the same manner as in Preparation Example 1-10, except that 1-bromodecane (preparation of Compound 12) or 1-bromododecane (preparation of Compound 13) was used instead of 1-bromooctane in Preparation Example 1-10.

**Preparation Example 1-12. Synthesis of Compound 14**

Compound 13 prepared in Preparation Example 1-11 was dissolved in water, sodium tetrafluoroborate was dissolved in water, and the two solutions were mixed with each other. Upon stirring, the product was precipitated as a solid, and the solid was filtered and washed several times with water to prepare Compound 14.

**Preparation Example 1-13. Synthesis of Compound 15**

Compound 15 was prepared in the same manner as in Preparation Example 1-12, except that sodium trifluoromethanesulfonate was used instead of sodium tetrafluoroborate in Preparation Example 1-12.
Although a static precipitation method of adding a reactant to a nonsolvent was used in Preparation Examples 1-1 to 1-12, a reverse precipitation method of adding a nonsolvent to a reactant may also be used. Furthermore, in addition to 15:1, other ratios of MTBE and reaction solution may be used, and for example, 12:1 and 26:1 may be used.
The structures of Compounds 1 to 15 prepared in Preparation Examples 1-1 to 1-13 above are as follows.

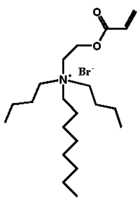

Compoumd 1

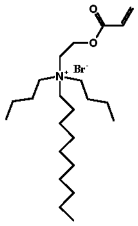

Compoumd 2

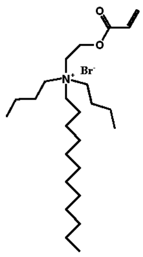

Compoumd 3

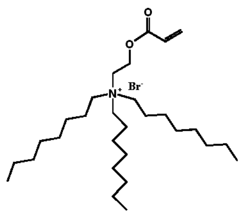

Compoumd 4

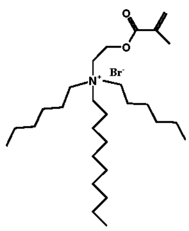

Compoumd 5

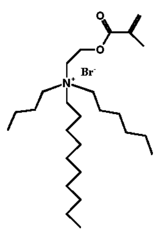

Compoumd 6

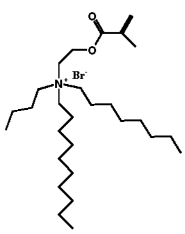

Compoumd 7

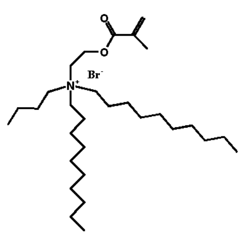

Compoumd 8

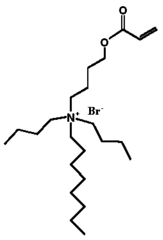

Compoumd 9

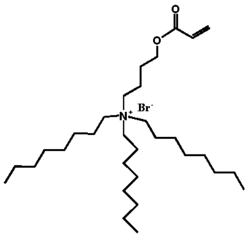

Compoumd 10

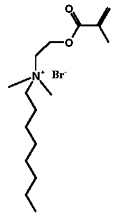

Compoumd 11

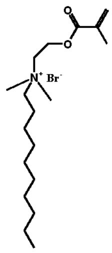

Compoumd 12

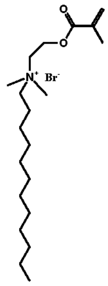

Compoumd 13

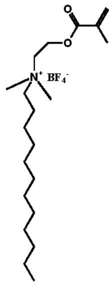

Compoumd 14

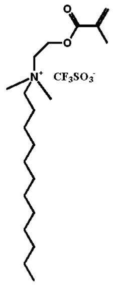

Compoumd 15

It was confirmed through NMR measurement that Compounds 1 to 15 were synthesized.

Representative NMR measurement results of Compounds 14 and 15 are shown in FIGS. 1 to 4.

FIG. 1 illustrates H NMR measurement results of Compound 14.

FIG. 2 illustrates F NMR measurement results of Compound 14.

FIG. 3 illustrates H NMR measurement results of Compound 15.

FIG. 4 illustrates F NMR measurement results of Compound 15.

### <Preparation Example 2> Preparation of antibacterial resin

#### Preparation Example 2-1.

Styrene (10 g, Aldrich), Compound 1 (0.36 g) prepared in Preparation Example 1, azobisisobutyronitrile (AIBN) (0.08 g, Aldrich), and acetonitrile (10 mL) were sequentially put into a flask. After the resulting mixture was allowed to react at 80°C for 16 hours, the resulting product was precipitated with isopropyl alcohol (Duksan), and after the precipitation, only a solid was selectively obtained through a filter. Sample 1 was secured by drying the solid in a vacuum oven to completely remove the residual solvent.

It was confirmed through GPC measurement that Samples 1 to 15 were prepared.

As a representative example, the GPC measurement results of Samples 14 and 15 are shown.

(Sample 14) Mn: 87,080, Mw: 160,635, PDI: 1.8
(Sample 15) Mn: 86,161, Mw: 153,204, PDI: 1.8

#### Preparation Examples 2-2 to 2-15.

Samples 2 to 15 were secured in the same manner as in Preparation Example 2-1, except that compounds shown in the following Table 1 were used instead of Compound 1 in Preparation Example 2-1.

[Table 1]

| Sample No. | Compound used during preparation of sample |
|---|---|
| Sample 1 | Compound 1 |
| Sample 2 | Compound 2 |
| Sample 3 | Compound 3 |

(continued)

| Sample No. | Compound used during preparation of sample |
|---|---|
| Sample 4 | Compound 4 |
| Sample 5 | Compound 5 |
| Sample 6 | Compound 6 |
| Sample 7 | Compound 7 |
| Sample 8 | Compound 8 |
| Sample 9 | Compound 9 |
| Sample 10 | Compound 10 |
| Sample 11 | Compound 11 |
| Sample 12 | Compound 12 |
| Sample 13 | Compound 13 |
| Sample 14 | Compound 14 |
| Sample 15 | Compound 15 |

**Preparation Example 2-16.** Sample 16 was secured in the same manner as in Preparation Example 2-1, except that the polymerization was performed without using Compound 1 in Preparation Example 2-1.

**Preparation Example 2-17.**

Sample 17 was secured by simply mixing Compound 13 with styrene.

**Preparation Example 2-18.**

Styrene (10 g, Aldrich), Compound 12 (0.36 g), azobisisobutyronitrile (AIBN) (0.16 g, Aldrich), dodecyl mercaptane (0.20 g, Aldrich), and acetonitrile (90 mL) were sequentially put into a flask.

After the resulting mixture was allowed to react at 80°C for 4 hours, the resulting product was precipitated with isopropyl alcohol (Duksan), and after the precipitation, only a solid was selectively obtained through a filter. Sample 18 was secured by drying the solid in a vacuum oven to completely remove the residual solvent.

**Preparation Example 2-19.**

Styrene (10 g, Aldrich), Compound 12 (0.36 g), and azobisisobutyronitrile (AIBN) (0.01 g, Aldrich) were sequentially put into a flask.

After reaction at 70°C for 16 hours, the resulting product was dissolved in acetonitrile (10 mL).

The solution was precipitated with isopropyl alcohol (Duksan), and after the precipitation, only a solid was selectively obtained through a filter. Sample 19 was secured by drying the solid in a vacuum oven to completely remove the residual solvent.

The GPC measurement results of Samples 18 and 19 are shown.

(Sample 18) Mn: 5,432, Mw: 8,329, PDI: 1.5
(Sample 19) Mn: 382,786, Mw: 1,014,872, PDI: 2.7

**<Experimental Example 1> Measurement of antibacterial activity**

**Example 1-1.**

After 0.2 g of Sample 12 was put into a 50 mL conical tube, 10 mL of phosphate buffered saline inoculated with $2 \times 10^5$ CFU/mL of an *E. coli* strain was injected into the conical tube, and the conical tube was incubated in a shaking incubator maintained at 35°C for 1 hour. The culture solution was diluted 1-fold, 10-fold, and 100-fold, respectively, and spread on agar medium plates. The spread agar medium plate was allowed to stand for incubation at 37°C for 24 to 48

hours. Antibacterial activity was derived by calculating the following Equation 1 based on the CFU number of each of the samples diluted 1-fold, 10-fold, and 100-fold.

[Equation 1]

$$\text{Antibacterial activity}(\%) = (1-A_{sample}/A_{Reference}) \times 100$$

$A_{Sample}$ = Concentration of microorganism in medium incubated by adding the antibacterial resin
$A_{Reference}$ = Concentration of microorganism in medium incubated without adding the antibacterial resin

**Examples 1-2 to 1-4, Comparative Example 1-1 to Comparative Example 1-4.**

Antibacterial activity was derived in the same manner as in Example 1-1, except that samples in the following Table 2 were used instead of Sample 12 in Example 1-1.

The antibacterial activity derived by Equation 1 in Examples 1-1 to 1-4 and Comparative Examples 1-1 to 1-4 above is shown in the following Table 2.

[Table 2]

| No. | Resin | Log CFU/ml | Antibacterial activity |
|---|---|---|---|
| Example 1-1 | Sample 12 | 0 | 99.9 or more |
| Example 1-2 | Sample 13 | 0 | 99.9 or more |
| Example 1-3 | Sample 14 | 0 | 99.9 or more |
| Example 1-4 | Sample 15 | 0 | 99.9 or more |
| Comparative Example 1-1 | Sample 16 | 5.49 | 0 |
| Comparative Example 1-2 | Sample 17 | 0 | 99.9 or more |
| Comparative Example 1-3 | Sample 18 | 0 | 99.9 or more |
| Comparative Example 1-4 | Sample 19 | 0 | 99.9 or more |

Through Table 2 above, it can be confirmed that the antibacterial resins according to one embodiment of the present specification (Examples 1-1 to 1-4) have excellent antibacterial activity compared to the resin homopolymerized with only styrene (Comparative Example 1-1).

**<Experimental Example 2> Measurement of antibacterial stability**

**Example 2-1.**

After Sample 12 was stored in water at room temperature for 24 hours, the remaining solid material was obtained to prepare Sample 12-1. After 0.2 g of Sample 12-1 was put into a 50 mL conical tube, 10 mL of phosphate buffered saline inoculated with 2 x $10^5$ CFU/mL of strain was injected into the conical tube, and the conical tube was incubated in a shaking incubator maintained at 35°C for 1 hour. The culture solution was diluted 1-fold, 10-fold, and 100-fold, respectively, and spread on agar medium plates. The spread agar medium plate was allowed to stand for incubation at 37°C for 24 to 48 hours. Antibacterial activity was derived by calculating Equation 1 above based on the CFU number of each of the samples diluted 1-fold, 10-fold, and 100-fold.

**Example 2-2.**

After Sample 13 was stored in water at room temperature for 24 hours, the remaining solid material was obtained to prepare Sample 13-1. For Sample 13-1, the antibacterial activity was derived in the same manner as in Example 2-1.

**Example 2-3.**

After Sample 14 was stored in water at room temperature for 24 hours, the remaining solid material was obtained

to prepare Sample 14-1. For Sample 14-1, the antibacterial activity was derived in the same manner as in Example 2-1.

**Example 2-4.**

After Sample 15 was stored in water at room temperature for 24 hours, the remaining solid material was obtained to prepare Sample 15-1. For Sample 15-1, the antibacterial activity was derived in the same manner as in Example 2-1.

**Comparative Example 2-1.**

After Sample 17 was stored in water at room temperature for 24 hours, the remaining solid material was obtained to prepare Sample 17-1. For Sample 17-1, the antibacterial activity was derived in the same manner as in Example 2-1.

**Comparative Example 2-2.**

After Sample 18 was stored in water at room temperature for 24 hours, the remaining solid material was obtained to prepare Sample 18-1. For Sample 18-1, the antibacterial activity was derived in the same manner as in Example 2-1.

**Comparative Example 2-3.**

After Sample 19 was stored in water at room temperature for 24 hours, the remaining solid material was obtained to prepare Sample 19-1. For Sample 19-1, the antibacterial activity was derived in the same manner as in Example 2-1.

The antibacterial activity derived by Equation 1 in Examples 2-1 to 2-4 and Comparative Examples 2-1 to 2-3 above is shown in the following Table 3.

[Table 3]

| No. | Resin | Log CFU/ml | Antibacterial activity |
|---|---|---|---|
| Example 2-1 | Sample 12-1 | 0 | 99.9 or more |
| Example 2-2 | Sample 13-1 | 0 | 99.9 or more |
| Example 2-3 | Sample 14-1 | 0 | 99.9 or more |
| Example 2-4 | Sample 15-1 | 0 | 99.9 or more |
| Comparative Example 2-1 | Sample 17-1 | 5.49 | 0 |
| Comparative Example 2-2 | Sample 18-1 | 5.23 | 39.5 |
| Comparative Example 2-3 | Sample 19-1 | 0 | 99.9 or more |

Through Table 3 above, it can be confirmed that the antibacterial resin according to an exemplary embodiment of the present specification maintains its antibacterial activity even after a certain period of time has passed. In contrast, it can be confirmed that in the case of a resin in which a compound and styrene are simply mixed (Comparative Example 2-1) and resins having a weight average molecular weight of less than 10,000 g/mol (Comparative Examples 2-2 and 2-3), the antibacterial activity deteriorates after a certain period of time has passed. Through this, it can be confirmed that the antibacterial resin according to an exemplary embodiment of the present specification is excellent in both antibacterial activity and antibacterial persistence.

**<Experimental Example 3> Measurement of heat resistance**

**Example 3-1.**

The thermal decomposition temperature of Sample 12 was measured using a thermogravimetric analyzer (TGA, TA Instrument, DISCOVERY TGA 550 W/MFC & AUTO). More specifically, under the conditions of normal pressure and a temperature at which the sample was warmed from 50°C to 600°C at a rate of 10°C/min, the first temperature decreasing section in a mass decreasing curve was determined as the thermal decomposition temperature.

**Example 3-2.**

A thermal decomposition temperature was measured in the same manner as in Example 3-1, except that

Sample 14 was used instead of Sample 12 in Example 3-1.

**Example 3-3.**

A thermal decomposition temperature was measured in the same manner as in Example 3-1, except that Sample 15 was used instead of Sample 12 in Example 3-1.

**Comparative Example 3-1.**

A thermal decomposition temperature was measured in the same manner as in Example 3-1, except that Sample 16 (styrene homopolymer) was used instead of Sample 12 in Example 3-1.

The thermal decomposition measurement results measured in Examples 3-1 to 3-3 are shown in FIG. 5, and the thermal decomposition measurement results measured in Comparative Example 3-1 are shown in FIG. 6.

The high thermal decomposition temperature means that the heat resistance characteristics are improved. From FIG. 5, it can be confirmed that all the antibacterial resins according to an exemplary embodiment of the present specification exhibit a thermal decomposition temperature of 150°C or higher. It can be confirmed that in particular, when the antibacterial resin according to an exemplary embodiment of the present specification includes anions other than a halogen group (Examples 3-2 and 3-3), the antibacterial resin exhibits a thermal decomposition temperature (300°C or higher) similar to that of polystyrene (Comparative Example 3-1, FIG. 6).

Through the above-described exemplary embodiments, it can be confirmed that the antibacterial resin of the present invention exhibits antibacterial properties and antibacterial persistence, and also has heat resistance characteristics. In particular, it can be confirmed that the heat resistance characteristics are further improved when substituted with specific anions.

**<Experimental Example 4> Measurement of antibacterial activity after extrusion**

**Preparation Example 4-1.**

Styrene (1000 g, Aldrich), Compound 12 (360 g), azobisisobutyronitrile (AIBN) (80 g, Aldrich), and acetonitrile (1000 mL) were sequentially put into a 3000-mL flask.

After the resulting mixture was allowed to react at 80°C for 16 hours, the resulting product was precipitated with isopropyl alcohol (Duksan), and after the precipitation, only a solid was selectively obtained through a filter.

After the solid was dried in a vacuum oven to completely remove the residual solvent, Sample 20 was secured.

It was confirmed through GPC measurement that Sample 20 was prepared.

(Sample 20) Mn: 87,451, Mw: 162,400, PDI: 1.9

**Preparation Example 4-2.**

Styrene (1000 g, Aldrich), Compound 12 (360 g), and azobisisobutyronitrile (AIBN) (10 g, Aldrich) were sequentially put into a 3000-mL flask.

After reaction at 70°C for 16 hours, the resulting product was dissolved in acetonitrile (1000 mL).

The solution was precipitated with isopropyl alcohol (Duksan), and after the precipitation, only a solid was selectively obtained through a filter.

After the solid was dried in a vacuum oven to completely remove the residual solvent, Sample 21 was secured.

It was confirmed through GPC measurement that Sample 21 was prepared.

(Sample 21) Mn: 364,809, Mw: 1,026,020, PDI: 2.8

**Preparation Example 5-1**

Sample 20 was extruded using a 16 mm extruder (16 mm Twin Screw Extruder LTE 16, LABTECH). More specifically, extrusion was performed at a screw speed of 160 RPM under isothermal conditions of 200°C to obtain a long cylindrical sample with a diameter of 1 to 2 mm, and the sample was then cooled and cut into a length of about 2 mm to obtain Sample 20-1 in the form of a pellet. In this case, the pressure at a discharge part was 15 bar on average.

**Preparation Example 5-2**

Sample 21-1 in the form of a pellet was obtained by performing extrusion in the same manner as in Preparation Example 5-1, except that Sample 21 was used instead of Sample 20 provided in Preparation Example 5-1. In this case,

the pressure at a discharge part was 20 bar on average.

**Example 4-1**

After Sample 20 (0.2 g) was put into a 50 mL conical tube, 10 mL of phosphate buffered saline inoculated with 2 x $10^5$ CFU/mL of strain was injected into the conical tube, and the conical tube was incubated in a shaking incubator maintained at 35°C for 24 hours.

The culture solution was diluted 1-fold, 10-fold, and 100-fold, respectively, and spread on agar medium plates. The spread agar medium plate was allowed to stand for incubation at 37°C for 24 to 48 hours. Antibacterial activity was derived by calculating Equation 1 above based on the CFU number of each of the samples diluted 1-fold, 10-fold, and 100-fold.

**Example 4-2.**

Antibacterial activity was derived in the same manner as in Example 4-1, except that Sample 20-1 was used instead of Sample 20 in Example 4-1.

**Comparative Example 4-1.**

Antibacterial activity was derived in the same manner as in Example 4-1, except that Sample 21 was used instead of Sample 20 in Example 4-1.

**Comparative Example 4-2.**

Antibacterial activity was derived in the same manner as in Example 4-1, except that Sample 21-1 was used instead of Sample 20 in Example 4-1.

The antibacterial activity of each of Examples 4-1 and 4-2 and Comparative Examples 4-1 and 4-2 is shown in the following Table 4.

[Table 4]

| No. | Resin | Log CFU/mL | Antibacterial activity (%) - in accordance with Equation 1 |
|---|---|---|---|
| Example 4-1 | Sample 20 | 0 | 99.9 or more |
| Example 4-2 | Sample 20-1 | 0 | 99.9 or more |
| Comparative Example 4-1 | Sample 21 | 0 | 99.9 or more |
| Comparative Example 4-2 | Sample 21-1 | 5.52 | 0 |

According to Table 4 above, it can be confirmed that when the antibacterial resin according to the present specification has a weight average molecular weight in a range of 10,000 g/mol to 1,000,000 g/mol, the antibacterial activity was maintained at a high level even after the extrusion processing process (Example 4-2) compared to before the extrusion process (Example 4-1). In contrast, when the weight average molecular weight is out of the range of 10,000 g/mol to 1,000,000 g/mol, it can be confirmed that the antibacterial resin according to the present specification has high antibacterial activity before the extrusion process (Comparative Example 4-1), but the antibacterial activity deteriorates after the extrusion processing process (Comparative Example 4-2).

The results as described above indicate that when a resin having an excessively high molecular weight is applied to a processing process such as extrusion, the resin remains under high temperature and high pressure conditions for long periods of time due to the high viscosity and low fluidity thereof, leading to a decrease in antibacterial activity.

## Claims

**1.** An antibacterial resin comprising a copolymer comprising:

a first unit derived from styrene; and
a second unit derived from a monomer represented by the following Chemical Formula 1,
wherein the copolymer has a weight average molecular weight of 10,000 g/mol or more and 1,000,000 g/mol

or less:

[Chemical Formula 1]

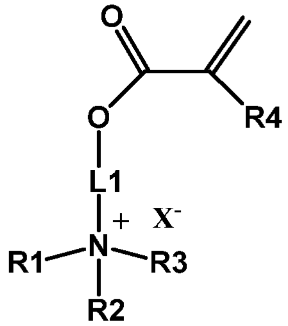

in Chemical Formula 1,

L1 is an alkylene group,
R1 to R3 are the same as or different from each other, and are each independently an alkyl group,
R4 is hydrogen or an alkyl group, and
$X^-$ is a monovalent anion.

**2.** The antibacterial resin of claim 1, wherein $X^-$ is any one selected from the following Group 1:

[Group 1]

$Br^-$, $Cl^-$, $I^-$, $F^-$, $BF_4^-$, $OH^-$, $CF_3COO^-$, $CF_3SO_3^-$, $NO_3^-$, $SH^-$,

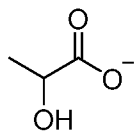 , 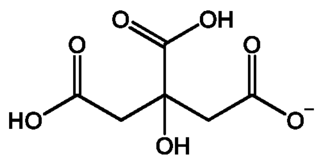 , 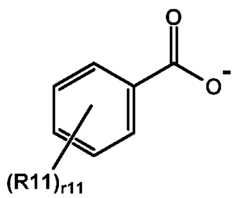 and

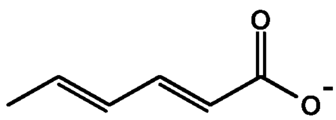

in Group 1,

R11 is hydrogen; deuterium; a hydroxy group; a substituted or unsubstituted alkoxy group; or a substituted or unsubstituted alkyl group, and
r11 is an integer from 1 to 5, and when r11 is 2 or higher, two or more R11's are the same as or different from each other.

**3.** The antibacterial resin of claim 1, wherein a molar ratio of the first unit to the second unit is 100:0.5 to 100:50.

**4.** The antibacterial resin of claim 1, wherein the copolymer is a random copolymer.

**5.** The antibacterial resin of claim 1, wherein any one of R1 to R3 is an alkyl group having 5 to 30 carbon atoms, and the others are the same as or different from each other, and are each independently an alkyl group having 1 to 30 carbon atoms.

**6.** The antibacterial resin of claim 1, wherein the monomer represented by Chemical Formula 1 is any one of the

following structures:

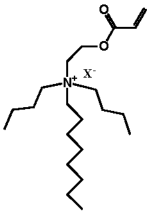
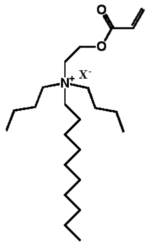
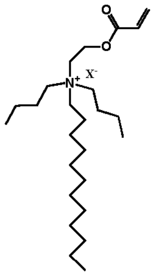
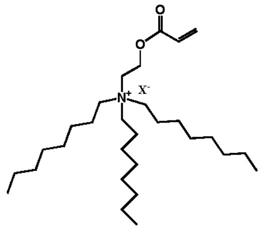
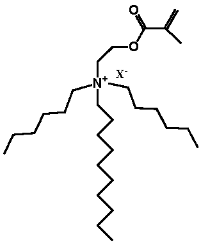
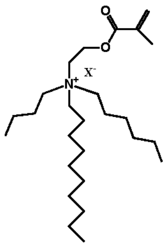
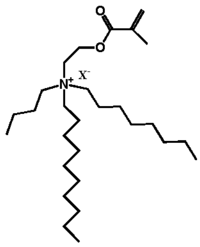
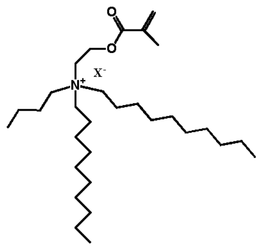
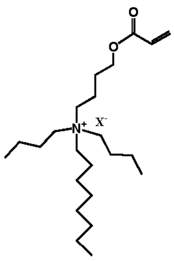
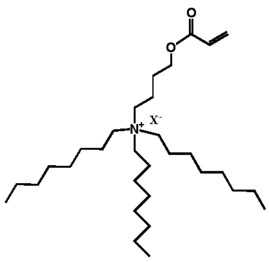
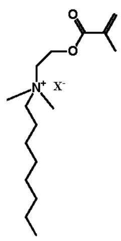
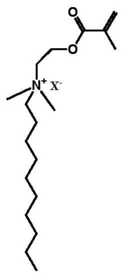
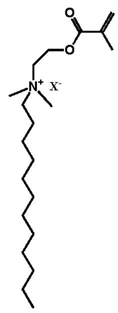

in the structures, X- is the same as that defined in claim 1.

**7.** The antibacterial resin of claim 1, wherein the antibacterial resin has an antibacterial activity of 90% or more against at least one strain selected from the group consisting of Gram-positive bacteria, Gram-negative bacteria, and molds, as measured by the following Method 1:
[Method 1]
After 0.2 g of the antibacterial resin is put into a 50 mL conical tube, 10 mL of phosphate buffered saline inoculated with 2 x $10^5$ CFU/mL of strain is injected into the conical tube, and the conical tube is incubated in a shaking incubator maintained at 35°C for 1 hour, the culture solution is diluted 1-fold, 10-fold, and 100-fold, respectively, and spread on agar medium plates, the spread agar medium plate is allowed to stand for incubation at 37°C for 24 to 48 hours, antibacterial activity is derived by calculating the following Equation 1 based on the CFU number of each of the samples diluted 1-fold, 10-fold, and 100-fold.

[Equation 1]

$$\text{Antibacterial activity} = (1-A_{sample}/A_{Reference}) \times 100\%$$

$A_{Sample}$ = Concentration of microorganism in medium incubated by adding the antibacterial resin
$A_{Reference}$ = Concentration of microorganism in medium incubated without adding the antibacterial resin

**8.** The antibacterial resin of claim 7, wherein the Gram-positive bacteria are selected from *Enterococcus faecalis, Staphylococcus aureus, Streptococcus pneumoniae, Enterococcus faecium* and *Lactobacillus lactis.*

**9.** The antibacterial resin of claim 7, wherein the Gram-negative bacteria are selected from *Proteus mirabilis, Es-*

*cherichia coll, Salmonella typhi, Pseudomonas aeruginosa* and *Vibrio cholerae.*

**10.** A molded article comprising the antibacterial resin according to any one of claims 1 to 9 or prepared therefrom.

[Figure 1]

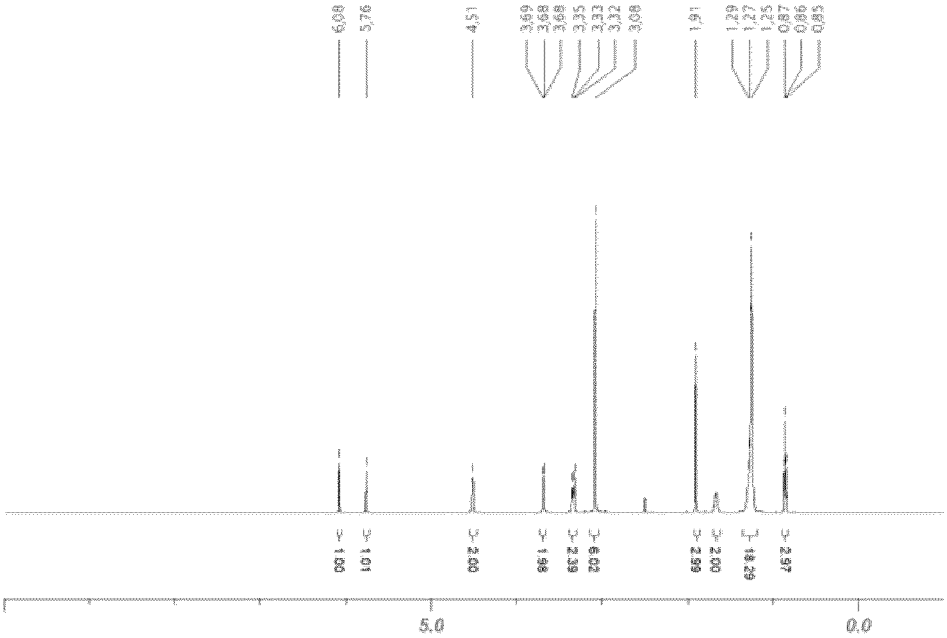


[Figure 2]

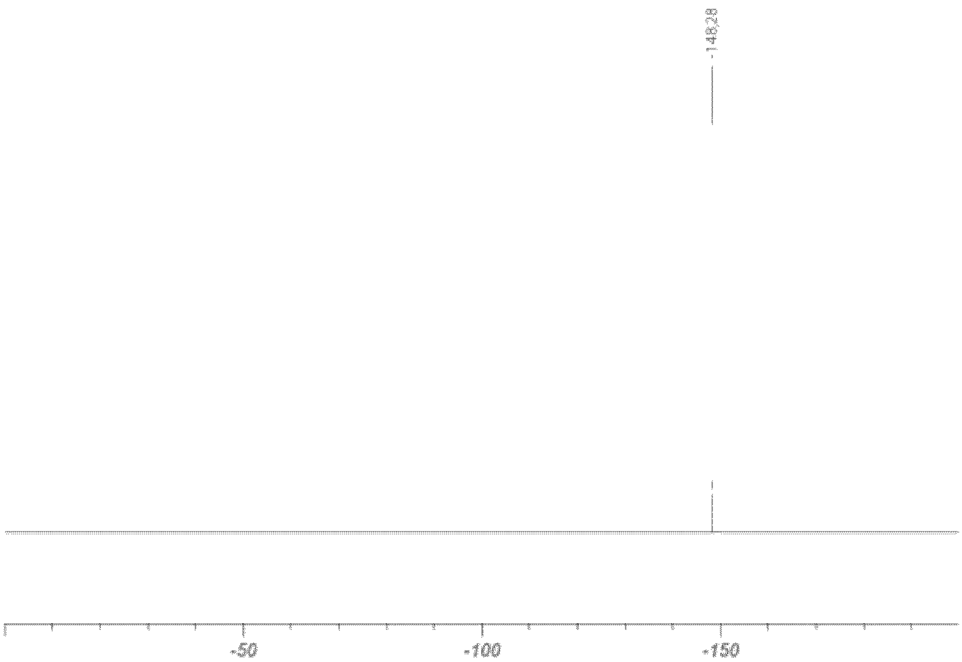

[Figure 3]

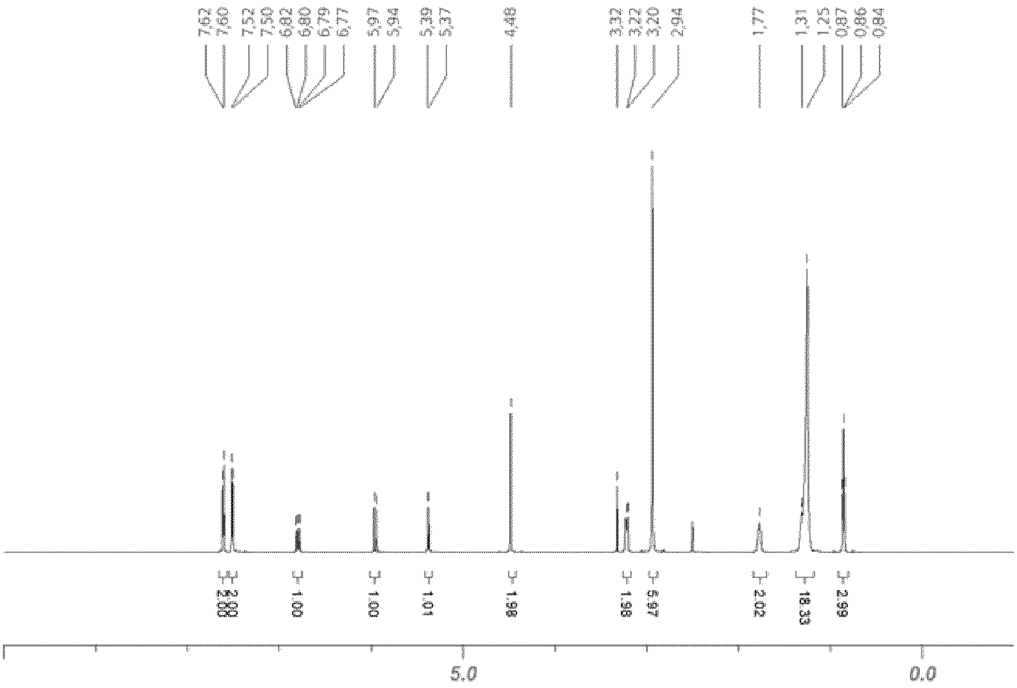


[Figure 4]

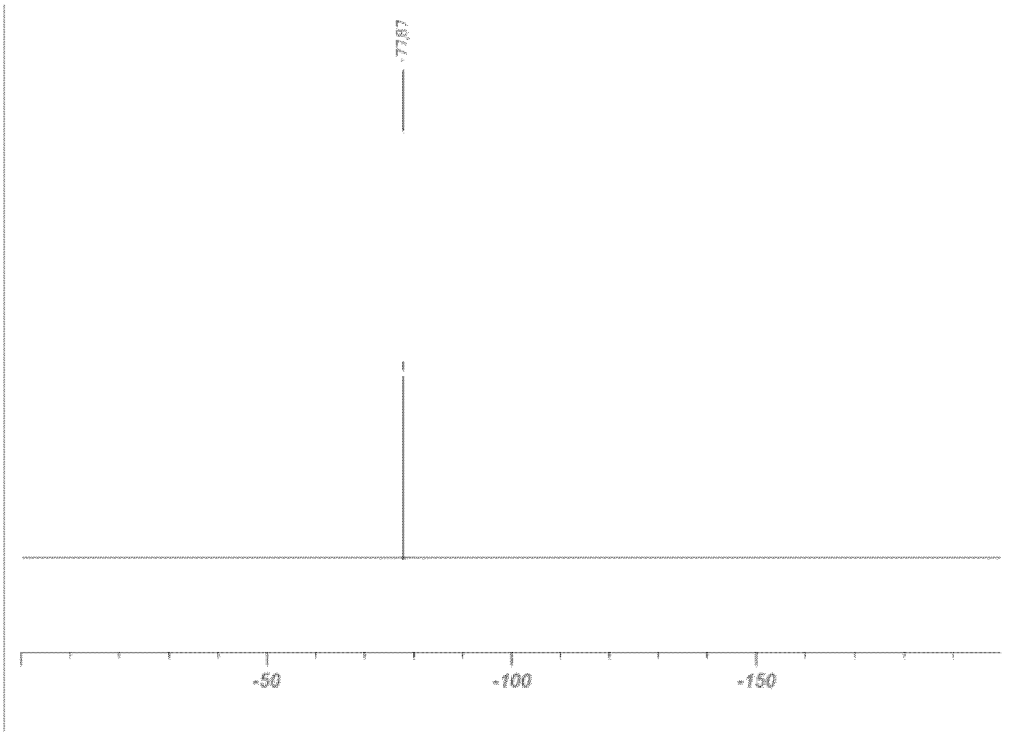

[Figure 5]

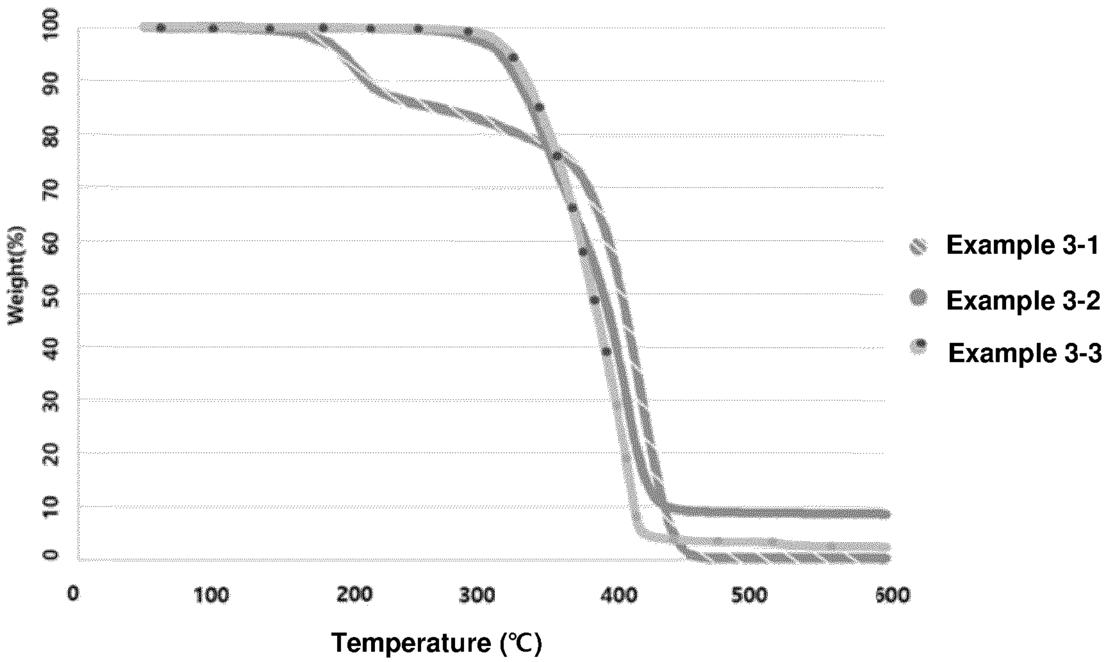
Weight(%)
0
10
20
30
40
50
60
70
80
90
100
0
100
200
300
400
500
600
Temperature (℃)
Example 3-1
Example 3-2
Example 3-3

[Figure 6]

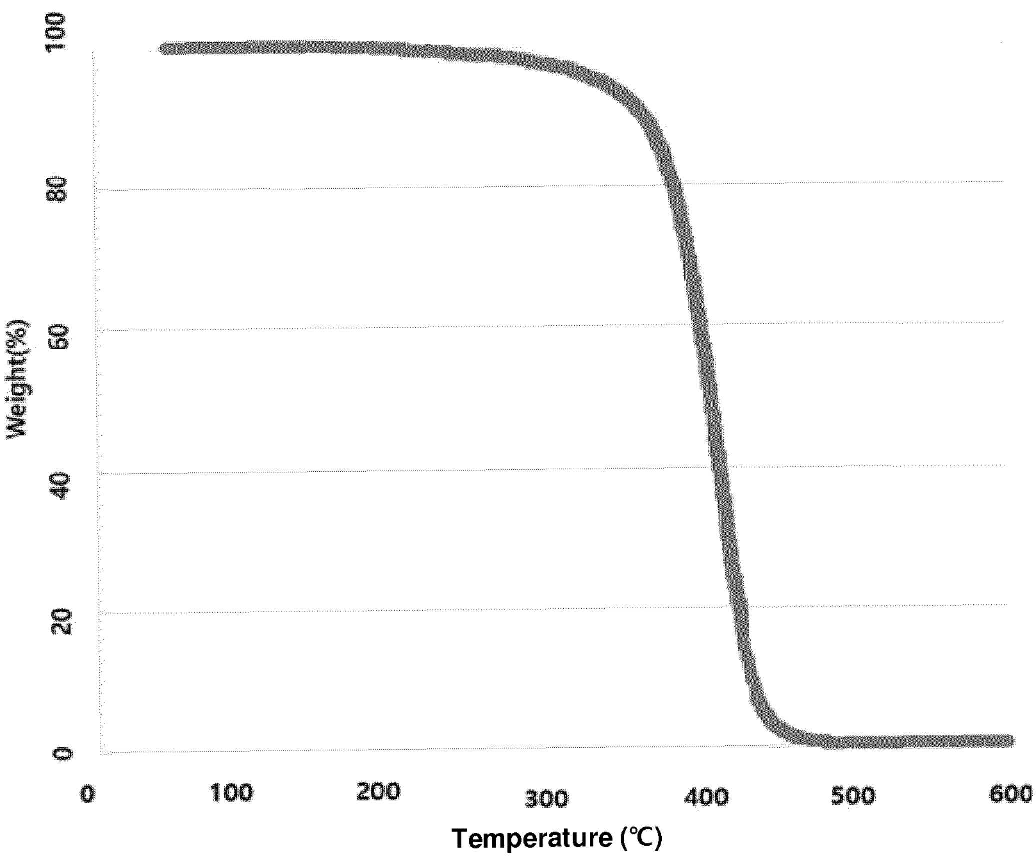

**INTERNATIONAL SEARCH REPORT**

International application No. **PCT/KR2023/015815**

**A. CLASSIFICATION OF SUBJECT MATTER**

**C08F 212/08**(2006.01)i; **C08F 220/34**(2006.01)i; **C08L 25/14**(2006.01)i; **C08F 210/06**(2006.01)i; **C08F 220/36**(2006.01)i; **C08L 23/12**(2006.01)i; **C08L 33/06**(2006.01)i

According to International Patent Classification (IPC) or to both national classification and IPC

**B. FIELDS SEARCHED**

Minimum documentation searched (classification system followed by classification symbols)

C08F 212/08(2006.01); A61K 31/785(2006.01); A61P 31/04(2006.01); C08F 220/14(2006.01); C08F 220/18(2006.01); C08F 220/44(2006.01); C08F 8/30(2006.01); C08J 3/20(2006.01); C09D 7/20(2018.01); C09D 7/40(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 항균수지(antibacterial resin), 4급 암모늄(quaternary ammonium), (메타)아크릴레이트(methacrylate), 스타이렌(styrene), 중량평균분자량(weight-average molecular weight)

**C. DOCUMENTS CONSIDERED TO BE RELEVANT**

| Category* | Citation of document, with indication, where appropriate, of the relevant passages | Relevant to claim No. |
|---|---|---|
| Y | CN 103694401 A (SOUTH CHINA AGRICULTURAL UNIVERSITY) 02 April 2014 (2014-04-02) See abstract; claims 1, 9 and 10; and paragraphs [0040]-[0042], example 3. | 1-10 |
| Y | KR 10-2022-0046496 A (LG CHEM, LTD.) 14 April 2022 (2022-04-14) See paragraphs [0085] and [0252]. | 1-10 |
| A | WO 97-49413 A1 (GELTEX PHARMACEUTICALS, INC.) 31 December 1997 (1997-12-31) See claims 1, 2, 4, 20 and 24; and page 7, lines 5-7; page 11, lines 14-25 and pages 16 and 35-36. | 1-10 |
| A | JP 2010-529276 A (NOTTINGHAM TRENT UNIVERSITY) 26 August 2010 (2010-08-26) See claims 14 and 15. | 1-10 |
| A | CN 107488245 A (ANHUI JIANZHU UNIVERSITY) 19 December 2017 (2017-12-19) See entire document. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2024** | **02 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/015815**

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2009-0025265 A (NOVARTIS AG) 10 March 2009 (2009-03-10)<br>See entire document. | 1-10 |

Form PCT/ISA/210 (second sheet) (July 2022)

**INTERNATIONAL SEARCH REPORT**
**Information on patent family members**

International application No.
**PCT/KR2023/015815**

| Patent document cited in search report | Publication date (day/month/year) | Patent family member(s) | Publication date (day/month/year) |
|---|---|---|---|
| CN 103694401 A | 02 April 2014 | CN 103694401 B | 13 January 2016 |
| KR 10-2022-0046496 A | 14 April 2022 | CN 115175968 A | 11 October 2022 |
| | | EP 4086317 A1 | 09 November 2022 |
| | | EP 4086317 A4 | 20 September 2023 |
| | | JP 2023-514629 A | 06 April 2023 |
| | | US 2023-0120607 A1 | 20 April 2023 |
| | | WO 2022-075763 A1 | 14 April 2022 |
| WO 97-49413 A1 | 31 December 1997 | AU 3231197 A | 14 January 1998 |
| | | AU 727732 B2 | 21 December 2000 |
| | | BR 9710984 A | 08 January 2002 |
| | | CA 2259344 A1 | 31 December 1997 |
| | | DE 69737232 T2 | 11 October 2007 |
| | | EP 0915705 A1 | 19 May 1999 |
| | | EP 0915705 B1 | 10 January 2007 |
| | | JP 2002-515039 A | 21 May 2002 |
| | | JP 4293382 B2 | 08 July 2009 |
| | | US 2001-0053794 A1 | 20 December 2001 |
| | | US 2002-0114777 A1 | 22 August 2002 |
| | | US 2004-0022759 A1 | 05 February 2004 |
| | | US 6034129 A | 07 March 2000 |
| | | US 6395777 B2 | 28 May 2002 |
| | | US 6593366 B2 | 15 July 2003 |
| | | US 6767549 B2 | 27 July 2004 |
| JP 2010-529276 A | 26 August 2010 | EP 2155825 A2 | 24 February 2010 |
| | | GB 2450475 A | 31 December 2008 |
| | | US 2010-0216908 A1 | 26 August 2010 |
| | | WO 2008-152417 A2 | 18 December 2008 |
| | | WO 2008-152417 A3 | 23 April 2009 |
| | | WO 2008-152417 A8 | 12 February 2009 |
| CN 107488245 A | 19 December 2017 | None | |
| KR 10-2009-0025265 A | 10 March 2009 | AU 2007-264041 A1 | 03 January 2008 |
| | | AU 2007-264041 B2 | 07 July 2011 |
| | | BR PI0713986 A2 | 20 November 2012 |
| | | CA 2654506 A1 | 03 January 2008 |
| | | CN 101478976 A | 08 July 2009 |
| | | CN 101478976 B | 13 November 2013 |
| | | EP 2035017 A2 | 18 March 2009 |
| | | JP 2009-541539 A | 26 November 2009 |
| | | JP 2014-058680 A | 03 April 2014 |
| | | JP 5399896 B2 | 29 January 2014 |
| | | MX 2008016341 A | 16 January 2009 |
| | | RU 2009102277 A | 10 August 2010 |
| | | RU 2474428 C2 | 10 February 2013 |
| | | US 2010-0003212 A1 | 07 January 2010 |
| | | WO 2008-000429 A2 | 03 January 2008 |
| | | WO 2008-000429 A3 | 04 September 2008 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220131728
- KR 1020230136278
- KR 1020090131847